Europäisches Patentamt

European Patent Office

Office européen des brevets

(19)

(11) Numéro de publication : **0 326 776 B1**

## (12) FASCICULE DE BREVET EUROPEEN

(45) Date de publication du fascicule du brevet :
**12.08.92 Bulletin 92/33**

(51) Int. Cl.$^5$ : **G01C 19/64**

(21) Numéro de dépôt : **88403361.4**

(22) Date de dépôt : **29.12.88**

(54) **Dispositif mécanique oscillant à excitation piézoélectrique et son application à l'activation d'un gyromètre à laser.**

(30) Priorité : **30.12.87 FR 8718351**

(43) Date de publication de la demande :
**09.08.89 Bulletin 89/32**

(45) Mention de la délivrance du brevet :
**12.08.92 Bulletin 92/33**

(84) Etats contractants désignés :
**BE DE ES GB IT**

(56) Documents cités :
**FR-A- 2 512 947**
**FR-A- 2 515 073**
**GB-A- 2 188 188**

(73) Titulaire : **SEXTANT AVIONIQUE**
**Immeuble le Galilée Parc Tertiaire de Meudon**
**5/7, rue Jeanne Braconnier**
**F-92366 Meudon la Foret Cédex (FR)**

(72) Inventeur : **Escobar, Edouard**
**39, Avenue du Maréchal Leclerc**
**F-86100 Chatellerault (FR)**

(74) Mandataire : **Marquer, Francis et al**
**Cabinet Moutard 35, Avenue Victor Hugo**
**F-78960 Voisins le Bretonneux (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 326 776 B1

## Description

La présente invention concerne un dispositif mécanique oscillant de type masse-ressort utilisable notamment, mais non exclusivement, dans un système d'oscillation mécanique, habituellement appelé "système d'activation" d'un gyromètre à laser.

D'une manière générale, on sait que les gyromètres à laser, appelés ci-après gyrolasers, comportent généralement un bloc optique dans lequel circulent deux ondes électromagnétiques tournant en sens inverse l'une de l'autre.

Pour éviter les effets du phénomène bien connu de blocage entre les deux ondes électromagnétiques (zone aveugle), le bloc optique du gyrolaser est généralement animé d'un mouvement de rotation alternatif de faible amplitude autour de son axe sensible. La fréquence et l'amplitude du mouvement sont choisies de telle façon que la vitesse angulaire du bloc optique soit la plus grande partie du temps plus grande que la zone aveugle.

Ce mouvement, appelé activation, est le plus souvent créé par un dispositif oscillant utilisant des moyens élastiques qui peuvent être placés à l'intérieur et au centre du bloc optique, et dont la raideur détermine, avec l'inertie dudit bloc optique, une fréquence d'oscillation entretenue par un moteur piézoélectrique, commandé par des circuits électroniques.

En pratique, les moyens élastiques sont réalisés sous forme d'une sorte de roue dont les rayons sont des lames élastiques sur lesquelles sont collées des céramiques piézoélectriques. Les dimensions desdites lames déterminent leur raideur et donc la fréquence d'oscillation.

Cette roue doit présenter des caractéristiques très difficiles à concilier et qui concernent l'amplitude et la fréquence du mouvement d'activation, la minimisation du nombre des céramiques piézoélectriques et la raideur autour des axes perpendiculaires au mouvement d'activation.

De nombreuses solutions ont été proposées pour réaliser le système d'activation des gyrolasers. Toutefois, ces solutions ont toujours été limitées dans leurs performances par l'efficacité des céramiques piézoélectriques collées sur les lames élastiques, obligeant à multiplier lesdites céramiques pour obtenir l'amplitude du mouvement recherchée. Tel est le cas des mécanismes du type de celui décrit dans le brevet GB-2 188 188.

Pour tenter d'éviter cet inconvénient, on a proposé de séparer les fonctions exécutées par le système d'activation et d'éviter qu'aucune de ces fonctions n'interfère avec une autre fonction. Une solution de ce type, qui est décrite dans le brevet FR 2 515 073, conduit à une structure relativement complexe utilisant un nombre important de rayons et de céramiques piézoélectriques.

La présente invention apporte une solution qui permet, dans un dispositif mécanique de type masse-ressort à excitation piézoélectrique, d'une part d'augmenter très sensiblement l'efficacité des céramiques piézoélectriques et donc d'en diminuer le nombre et, d'autre part, d'obtenir un système élastique présentant une raideur très élevée suivant les axes perpendiculaires à l'axe du mouvement d'activation.

Elle propose à cet effet un dispositif mécanique oscillant de type masse-ressort à oscillation entretenue, ce dispositif comprenant deux éléments montés oscillants l'un par rapport à l'autre, avec rappel élastique, grâce à au moins une lame élastique, l'entretien des oscillations étant obtenu au moyen d'une céramique piézoélectrique fixée sur l'une des deux faces de ladite lame.

Selon l'invention, ce dispositif est plus particulièrement caractérisé en ce qu'au niveau de sa jonction avec l'un au moins des éléments, l'une des deux faces de ladite lame est prolongée par rapport à l'autre par un prolongement obtenu grâce à un usinage pénétrant à l'intérieur de cet élément et en ce que ladite céramique est fixée sur la face prolongée de manière à venir porter sur ledit prolongement.

L'invention concerne également un dispositif pour l'activation d'un gyromètre à laser, du type comprenant un bloc optique monté oscillant sur un support par l'intermédiaire d'un système élastique réalisé en forme de roue comportant deux éléments rotatifs l'un par rapport à l'autre, à savoir : une couronne extérieure et un moyeu relié par au moins trois lames flexibles dont au moins l'une est excitée par au moins une céramique piézoélectrique. Ce dispositif est caractérisé en ce qu'au niveau de sa jonction avec le moyeu, l'une des deux faces d'au moins l'une desdites lames est prolongée par rapport à l'autre face par un prolongement obtenu grâce à un usinage pénétrant à l'intérieur du moyeu, et en ce que ladite céramique est fixée sur cette lame de manière à venir porter sur ledit prolongement.

Selon un mode d'exécution particulièrement avantageux de l'invention, le système élastique comprend une pluralité de lames placées par paires dont les faces prolongées sont tournées l'une vers l'autre et font entre elles un angle aussi aigu que possible.

Des modes de réalisation de l'invention seront décrits ci-après, à titre d'exemples non limitatifs, avec référence aux dessins annexés, dans lesquels :

La figure 1 est une vue de dessus d'un gyrolaser de type connu auquel s'applique l'invention ;

La figure 2 est une vue en coupe du gyrolaser de la figure 1 ;

La figure 3 est une vue partielle de dessus d'un système élastique selon l'art antérieur ;

La figure 4 est une vue partielle de dessus d'un système élastique selon l'invention ;

La figure 5 est une vue de dessus d'un système élastique selon l'invention ; et

La figure 6 est une vue en coupe du système élastique de la figure 5.

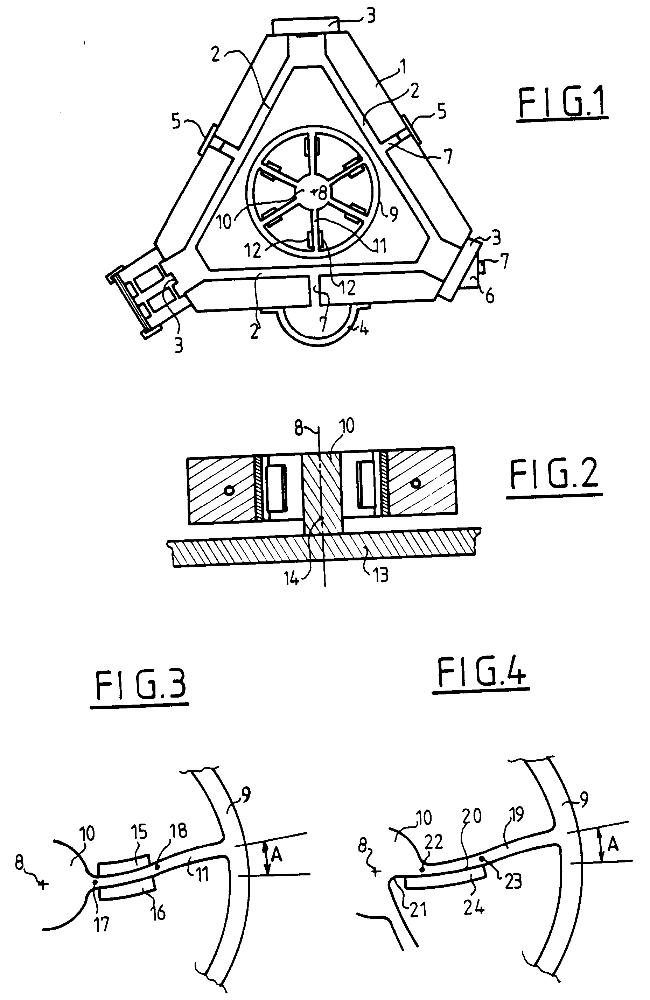

Comme précédemment mentionné, et ainsi que le montre la figure 1, un gyrolaser comprend notamment :

– un bloc optique 1, réalisé dans un matériau isolant et étanche à l'hélium, généralement une céramique vitrifiée du genre "zérodur", dans lequel sont percés des conduits 2, fermés par des miroirs 3 dont un au moins est généralement mobile et qui forment, avec lesdits conduits 2, un parcours optique, triangulaire dans le cas de la figure 1, mais qui peut prendre toute autre forme, un même bloc optique pouvant comporter plusieurs parcours optiques ;

– un système de sortie des informations placé sur l'un des miroirs 3 et comportant au moins un prisme de mélange 6 et un ensemble de cellules photoélectriques 7 ;

– une ou deux cathodes 4 fixées sur le bloc optique 1 ;

– une ou deux anodes 5 également fixées sur le bloc optique 1.

Ces cathodes et anodes constituent les électrodes du gyrolaser et sont reliées aux conduits 2 par des conduits de raccordement 7.

Le bloc optique 1 est rempli d'un mélange gazeux généralement à base d'hélium et de néon. Un courant électrique passant entre les électrodes excite ce mélange gazeux et crée un plasma dans les conduits de raccordement 7 et dans les conduits 2, plasma qui, en amplifiant la lumière, génère l'effet laser.

Ce bloc optique 1 est monté oscillant autour d'un axe 8 grâce à une roue d'activation. Celle-ci est composée d'une couronne extérieure 9, d'un moyeu central 10 et d'au moins trois lames 11 sur lesquelles sont collées des céramiques piézoélectriques 12, le plus souvent de part et d'autre de chaque lame. Ainsi que déjà mentionné, le bloc optique est le plus souvent percé d'un trou central dans lequel la roue d'activation est fixée, soit par collage de la couronne extérieure 9, soit encore par un système de pincement non représenté.

Les céramiques piézoélectriques 12 sont placées sur les lames, à des endroits favorisant leur efficacité.

La figure 2 montre en vue en coupe le gyrolaser de la figure 1 et son dispositif d'activation ci-dessus décrits. On y voit clairement la partie centrale du moyeu 10 de la roue fixée sur une platine 13, qui peut constituer une partie du boîtier dudit gyrolaser.

Il apparaît également sur cette figure 2 que l'ensemble platine 13, moyeu 10 n'est pas infiniment raide et que, si le gyrolaser est soumis à des accélérations perpendiculaires à son axe 8, cet ensemble peut se déformer du fait de la masse du bloc optique 1 qui tourne ainsi autour d'un point figuré en 14. Cette rotation est très gênante pour la précision du gyrolaser.

La figure 3 est une vue partielle d'un système d'activation suivant l'art antérieur et illustre l'action des céramiques piézoélectriques. Sur cette figure, une lame 11 relie un moyeu 10 à une couronne extérieure 9 qui a tourné d'un angle A. Deux céramiques piézoélectriques 15 et 16 sont collées de part et d'autre de la lame 11, sur la partie de ladite lame 11 la plus proche du moyeu 10 et comprise entre les points 17 et 18. Ces céramiques sont branchées de façon à ce que l'une se dilate pendant que l'autre se contracte parallèlement à la lame 11, sous l'effet piézoélectrique, obligeant ladite lame à se courber dans un sens entre les points 17 et 18. L'autre partie de ladite lame se courbe nécessairement dans l'autre sens et la couronne tourne d'un angle A.

La partie utile de la lame 11 et des céramiques 15 et 16 est donc limitée à la distance séparant les deux points 17 et 18. Elle est en réalité encore plus courte du fait que la contrainte dans la lame n'est pas constante sur toute cette partie.

Si l'on observe que, sur une lame dépourvue de céramiques, la contrainte, lors d'une rotation de la couronne 8, est la plus forte près du moyeu, on conçoit aisément qu'il est intéressant de placer les céramiques piézoélectriques le plus près possible de celui-ci, pour en augmenter l'efficacité, et éventuellement de diminuer le diamètre dudit moyeu, au détriment de la raideur du système autour des axes perpendiculaires au mouvement d'activation.

La figure 4 illustre le principe de l'invention qui permet d'augmenter l'efficacité des céramiques et de ne plus utiliser qu'une seule céramique par lame au lieu de deux.

Pour cela, un système élastique selon l'invention comportera des lames 19 dissymétriques.

Une seule de ces lames 19 est représentée sur la figure 4, reliant un moyeu 10 et une couronne 9. Une face 20 de cette lame est allongée vers le centre du moyeu 10 grâce à un usinage 21 pénétrant à l'intérieur dudit moyeu. La lame peut se courber entre un point 22 situé sensiblement au même endroit que précédemment et un point 23 qui forme un point d'inflexion.

Une céramique 24, plus large que précédemment, est collée sur la face allongée 20, le plus près possible du moyeu 10, de sorte qu'elle prenne appui sur une partie dudit moyeu comprise entre l'axe 8 et le point 22.

De ce fait, l'efficacité de la céramique se trouve considérablement augmentée et le dispositif ne nécessite plus qu'une seule céramique par lame.

La place laissée libre par la céramique supprimée peut être utilisée pour renforcer le moyeu et augmenter la raideur transverse du dispositif.

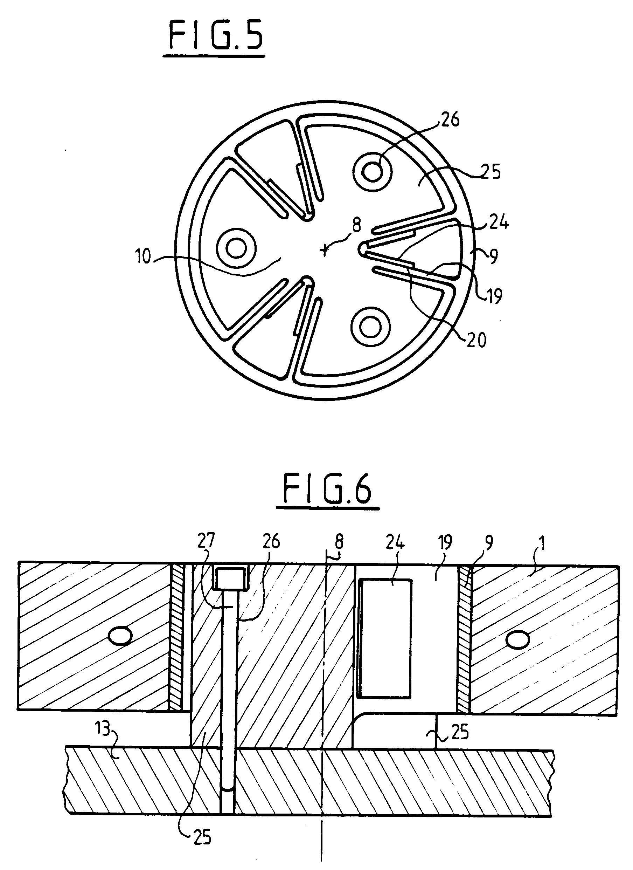

La figure 5 montre en vue de dessus un système élastique complet selon l'invention.

Il comprend :

– un moyeu 10 ;

– une couronne extérieure 9 ;

– au moins trois lames 19, et de préférence six, dissymétriques, reliant la couronne 9 et le moyeu 10, ayant chacune une face 20 allongée vers le moyeu 10, lesdites faces 20 étant de préférence tournées l'une vers l'autre deux à deux, étant avantageusement groupées par paires et faisant entre elles, dans chaque paire, un angle sensiblement inférieur à soixante degrés, de façon à laisser entre chaque paire un angle et donc un volume aussi important que possible ;

– au moins trois céramiques piézoélectriques 24, et de préférence six, collées sur les faces allongées 20 des lames 19 comme indiqué ci-dessus ;

– des secteurs de renforcement 25, préférentiellement trois, partant du moyeu 10, avantageusement de même hauteur que celui-ci et remplissant une partie aussi importante que possible du volume compris entre les lames ou de préférence entre les paires de lames et la couronne 9, sans, bien entendu, toucher ni la couronne ni les lames.

Chaque secteur est percé d'au moins un trou 26 pour la fixation du système sur la platine 13, à l'aide de vis 27 et ainsi que le montre la figure 6 qui est une vue en coupe dudit système.

Cette figure montre clairement que la rigidité procurée par les secteurs autour des axes perpendiculaires à l'axe du mouvement d'activation 8 est très supérieure à celle obtenue avec les dispositifs antérieurs.

On pourra bien entendu utiliser une combinaison de lames et de céramiques piézoélectriques telles que celles décrites précédemment pour tout autre système mécanique oscillant, par exemple du type masse-ressort, sans sortir du cadre de l'invention.

## Revendications

1. Dispositif mécanique oscillant de type masse-ressort à oscillation entretenue, ce dispositif comprenant deux éléments (9, 10) montés oscillants l'un par rapport à l'autre, avec rappel élastique, grâce à au moins une lame élastique (19), l'entretien des oscillations étant obtenu au moyen d'une céramique piézoélectrique fixée sur l'une des deux faces de ladite lame, caractérisé en ce qu'au niveau de sa jonction avec l'un au moins des éléments (9 ou 10), l'une des deux faces (20) de ladite lame (19) est prolongée par rapport à l'autre par un prolongement obtenu grâce à un usinage pénétrant à l'intérieur de cet élément, et en ce que ladite céramique (24) est fixée sur la face prolongée de manière à venir porter sur ledit prolongement.

2. Dispositif pour l'activation d'un gyromètre à laser du type comprenant un bloc optique (1) monté sur un support (13) par l'intermédiaire d'un système élastique en forme de roue comportant deux éléments rotatifs l'un par rapport à l'autre, à savoir : une couronne extérieure (9) et un moyeu (10) relié par au moins trois lames flexibles (19) dont au moins l'une est excitée par au moins une céramique piézoélectrique (24),
caractérisé en ce qu'au niveau de sa jonction avec le moyeu (10), l'une des deux faces (20) d'au moins l'une desdites lames (19) est prolongée par rapport à l'autre face, par un prolongement obtenu grâce à un usinage pénétrant à l'intérieur du moyeu (10), et en ce que ladite céramique (24) est fixée sur cette lame (19) de manière à venir porter sur ledit prolongement.

3. Dispositif selon la revendication 2, caractérisé en ce que le susdit système élastique comprend une pluralité de lames (19) placées par paires dont les faces prolongées (20) sont tournées l'une vers l'autre.

4. Dispositif selon l'une des revendications 2 et 3, caractérisé en ce que le susdit système mécanique comporte des secteurs de renforcement (25) solidaires du moyeu (10) et remplissant partiellement le volume laissé libre entre les paires de lames (19).

## Patentansprüche

1. Mechanische Schwingeinrichtung des Typs einer federnden Masse mit ungedämpfter Schwingung, wobei besagte Einrichtung zwei Elemente (9, 10) aufweist, die im Verhältnis zueinander schwingend mit elastischer Rückstellung durch mindestens eine elastische lamelle (19) montiert sind und die Schwingung durch eine piezoelektrische, auf einer der beiden Flächen der besagten lamelle befestigte Keramik aufrechterhalten wird,
dadurch gekennzeichnet, dass am Verbindungspunkt mit mindestens einem der Elemente (9 oder 10) eine der beiden Flächen (20) der besagten lamelle (19) im Verhältnis zur anderen durch eine mittels einer ins Innere dieses Elementes eindringenden Bearbeitung erhaltene Verlängerung verlängert wird und dass besagte Keramik (24) auf der verlängerten Fläche so befestigt ist, dass sie bis auf die Verlängerung reicht.

2. Einrichtung zur Anregung eines Laserkreisels, des Typs mit einer optischen Einheit (1), die durch ein elastisches System auf eine Trägervorrichtung montiert ist und dieses System die Form eines Rades hat, mit zwei, im Verhältnis zueinander drehbaren Elementen, nämlich : einer äusseren Krone (9) und einer mindestens durch drei biegsame Lamellen (19) verbundenen Nabe (10), und mindestens eine der Lamellen von mindestens einer piezoelektrischen Keramik (24) erregt werden kann,
dadurch gekennzeichnet, dass am Verbindungspunkt mit der Nabe (10) eine der beiden Flächen (20) mindestens einer der Lamellen (19) im Verhältnis zur anderen Fläche durch eine mittels einer ins Innere der Nabe (10) eindringenden Bearbeitung erhaltene Verlängerung verlängert wird und dass besagte Keramik (24) auf besagter lamelle (19) so befestigt ist, dass sie bis auf besagte Verlängerung reicht.

3. Einrichtung nach Anspruch 2, dadurch gekennzeichnet, dass besagtes elastisches System eine Vielzahl von paarweise angeordneten Lamellen (19) aufweist, deren verlängerte Flächen (20) einander zugekehrt sind.

4. Einrichtung nach einem der Ansprüchen 2 und 3, dadurch gekennzeichnet, dass besagtes mechanisches System mit der Nabe (10) fest verbundene Verstärkungsabschnitte (25) aufweist, welche teilweise den Freiraum zwischen den lamellenpaaren (19) ausfüllen.

**Claims**

1. Maintained oscillation mass-spring type mechanical oscillation device comprising two members (9, 10) mounted to oscillate relative to each other with spring return means comprising at least one spring blade (19), oscillation being maintained by means of a piezoelectric ceramic element fixed to one side of said spring blade, characterised in that where it merges with at least one of the members (9 or 10) one side (20) of said spring blade (19) is extended relative to the other by machining a recess into said member and in that said ceramic element (24) is fixed to the extended side so as to bear against said extension.

2. Actuator device for a laser gyro of the type comprising an optical unit (1) mounted on a support (13) by means of a spring system in the form of a wheel comprising two members rotatable relative to each other, namely: an outer ring (9) and a hub (10) linked by at least three flexible spring blades (19) at least one of which is excited by at least one piezo-electric ceramic element (24), characterised in that where it merges with the hub (10) one side (20) of at least one spring blade (19) is extended relative to the other side by machining a recess into the hub (10) and in that said ceramic element (24) is fixed to said blade (19) in such a way as to bear against said extension.

3. Device according to claim 2 characterised in that said spring system comprises a plurality of spring blades (19) disposed in pairs whose extended sides (20) are in face to face relationship.

4. Device according to claim 2 or claim 3 characterised in that said mechanical system comprises reinforcing sectors (25) fastened to the hub (10) and partially filling the free space left between the pairs of spring blades (19).

FIG.1

FIG.2

FIG.3

FIG.4

## FIG.5

## FIG.6